# FASCICULE DE BREVET EUROPEEN

(11) **EP 3 091 413 B1**
(45) Date de publication et mention de la délivrance du brevet: **07.04.2021**
(21) Numéro de dépôt: 16167761.2
(22) Date de dépôt: 29.04.2016
(51) Int. Cl.: G05D 1/08, B64C 13/16, B64C 13/50, B64C 27/00

(54) **LOI DE COMMANDE AVANCÉE POUR EMPENNAGE BRAQUABLE**
FORTGESCHRITTENE STEUERUNGSREGEL FÜR EIN LENKBARES LEITWERK
AN ADVANCED CONTROL LAW FOR A DEFLECTABLE STABILIZER

(30) Priorité: 05.05.2015 FR 1500935
(43) Date de publication de la demande: 09.11.2016
(73) Titulaire: Airbus Helicopters, 13725 Marignane Cedex (FR)
(72) Inventeur: MOREL, Hervé, 13113 LAMANON (FR); QUEIRAS, Nicolas, 13170 LES PENNES MIRABEAU (FR)
(74) Mandataire: GPI & Associés

(56) Documents cités:
- EP-A1- 1 547 920
- EP-A2- 0 183 282
- EP-A2- 0 743 582
- WO-A2-2004/007282
- FR-A1- 2 383 475
- FR-A1- 2 456 663
- FR-A1- 2 771 706

## Description

La présente invention concerne un procédé de commande d'un moyen de stabilisation en tangage mobile d'un aéronef. Plus particulièrement, l'invention se situe dans le domaine technique restreint des moyens de stabilisation en tangage des giravions.

Classiquement, un giravion comprend par exemple un fuselage s'étendant longitudinalement d'une extrémité avant vers une extrémité arrière de part et d'autre d'un plan antéropostérieur de symétrie, et selon une direction verticale d'une portion inférieure équipée d'un train d'atterrissage vers une portion supérieure munie d'une voilure tournante. La voilure tournante peut inclure au moins un rotor principal de sustentation voire de propulsion.

De plus, un giravion peut comporter un rotor arrière au niveau de son extrémité arrière. Le rotor arrière a notamment pour fonction de contrôler les mouvements en lacet du giravion.

Par ailleurs, un giravion comprend parfois des surfaces stabilisatrices additionnelles. Par exemple, un giravion est usuellement équipé d'une surface stabilisatrice de mouvements en lacet.

Une telle surface stabilisatrice de mouvements en lacet est généralement dénommée « dérive ».

De même, un giravion comporte parfois un moyen d'équilibrage et de stabilisation de mouvements en tangage dénommé plus simplement « moyen de stabilisation ». Un moyen de stabilisation présente une angulation dont la valeur absolue est comprise entre 0° et sensiblement 90° avec ledit plan antéropostérieur. Ce moyen de stabilisation en tangage peut comporter éventuellement deux surfaces stabilisatrices en tangage s'étendant symétriquement de part et d'autre d'un plan antéropostérieur de symétrie du giravion en étant orthogonales à ce plan antéropostérieur ou encore en présentant une forme de V par exemple.

Un tel moyen de stabilisation de mouvements en tangage est parfois nommé « empennage horizontal » ou plus simplement « empennage » par la suite. Le terme « empennage » est d'autant plus usité que le moyen de stabilisation n'est pas nécessairement horizontal. L'expression « moyen de stabilisation en tangage » est aussi utilisée.

Un empennage peut comprendre au moins une surface aérodynamique traversant de part en part l'extrémité arrière de l'aéronef selon une direction transversale, ou encore au moins une surface aérodynamique non traversante s'étendant transversalement à partir de cette extrémité arrière d'un unique coté dudit plan antéropostérieur.

En vol stationnaire, l'équilibre du moment du tangage du giravion par rapport à un point fixe fait intervenir deux composantes prépondérantes : une première composante due au poids et à la position du centre de gravité du giravion et une deuxième composante due aux forces aérodynamiques relatives au rotor principal de sustentation. Pour une masse donnée du giravion, cette deuxième composante est proportionnelle à l'angle de basculement du rotor principal par rapport à une direction verticale. Par ailleurs, les variations de centrage du giravion induisent des variations de l'assiette de ce giravion.

Lorsque le giravion est en vol de croisière, une troisième composante du moment de tangage intervient : le moment aérodynamique qui s'exerce sur le fuselage du giravion suite aux variations d'incidence du fuselage par rapport à l'écoulement d'air amont. Le moment aérodynamique de tangage tend à écarter le giravion de sa position d'équilibre. Cette troisième composante instable a pour conséquence d'augmenter les variations de l'assiette longitudinale liées au centrage par rapport aux variations observées durant un vol en stationnaire.

Ces variations d'assiette ont des conséquences négatives. Des assiettes à piquer importantes augmentent la traînée aérodynamique du giravion et réduisent en conséquence sa vitesse maximale. De telles assiettes à piquer conduisent également à une impression d'inconfort pour l'équipage et les passagers. Des assiettes à cabrer importantes entraînent des moments élevés sur le mât d'entraînement du rotor principal et le moyeu du rotor principal, avec des conséquences défavorables sur les durées de vie de ces éléments. A plus faible vitesse d'avancement et lors des phases d'atterrissage, des fortes assiettes à cabrer entraînent aussi une diminution de la visibilité du pilote et donc augmentation de ses charges de travail.

Le moyen de stabilisation en tangage placé vers l'arrière d'un giravion vise notamment à compenser l'instabilité de moment de tangage du fuselage et à équilibrer l'assiette du giravion. Le dimensionnement d'un moyen de stabilisation en tangage est complexe.

En effet, pour optimiser les performances d'un aéronef à vitesse élevée, le moyen de stabilisation en tangage est dimensionné de manière à obtenir une assiette longitudinale proche d'une assiette nulle. Ce dimensionnement est toutefois pénalisant pour le fonctionnement du rotor principal, sachant qu'une assiette à piquer élevée est souhaitable pour le fonctionnement de ce rotor principal quand la vitesse d'avancement du giravion est élevée.

De plus, le dimensionnement effectué doit être satisfaisant pour les différentes configurations de masse, d'altitude, de centrage du centre de gravité de l'aéronef et éventuellement de différentes configurations aérodynamiques externes possibles pour l'aéronef.

Eventuellement, l'efficacité du moyen de stabilisation en tangage peut être maximisée en augmentant sa surface alaire de manière à réduire les effets des perturbations liées aux variations de masse et de centrage du giravion.

Cependant, une telle solution est limitée en raison par exemple du phénomène de « bosse d'assiette » connu de l'homme du métier qui résulte des interactions entre le rotor principal et le moyen de stabilisation en tangage. De plus, une surface alaire importante tend à notamment entraîner des variations importantes de l'assiette de l'aéronef dans des phases de vol ou le flux d'air provenant du rotor principal impacte le moyen de stabilisation en tangage, par exemple lors d'une montée ou d'une descente de l'aéronef..

Les constructeurs ont cherché à remédier à ces inconvénients en créant un dispositif dit « dispositif de positionnement » par commodité. Un tel dispositif de positionnement a pour fonction de régler la position angulaire d'un moyen de stabilisation en tangage de manière à équilibrer un giravion en tangage, tout en maitrisant simultanément ses performances et les charges appliquées au moyeu d'un rotor principal, en s'affranchissant de l'effet des variations de centrage et en respectant les contraintes précitées nécessitant une limitation de la taille de ladite surface aérodynamique.

Ainsi, le moyen de stabilisation en tangage est alors mobile en rotation autour d'un axe de rotation. Le dispositif de positionnement permet par suite de régler un angle de braquage du moyen de stabilisation. Un tel angle de braquage représente un angle séparant une corde de référence du moyen de stabilisation en tangage et un plan de référence de l'aéronef, par exemple un plan de référence horizontal.

Ainsi, les documents US 2.424.882 et GB 657.796 prévoient un dispositif de positionnement comprenant un levier relié mécaniquement à un moyen de stabilisation en tangage pour contrôler la position de ce moyen de stabilisation.

Ces documents suggèrent un pilotage manuel du moyen de stabilisation en tangage. La commande du moyen de stabilisation en tangage représente alors un compromis exercé directement par le pilote de l'aéronef.

De même, le document WO 2004/007282 A2 présente un moyen de contrôle d'un empennage braquable indépendant d'une commande cyclique principale d'un hélicoptère. Ce moyen de contrôle comprend une commande manœuvrable par un pilote.

Devant la complexité technique croissante des giravions et de leur pilotage, des moyens de stabilisation en tangage sont commandés en tenant compte de facteurs différents, plutôt que sur la simple base d'une action du pilote.

Le document FR 2.456.663 prévoit l'emploi d'un dispositif de positionnement pour asservir la position d'un moyen de stabilisation en tangage en fonction de conditions de vol.

Ce dispositif de positionnement comprend un moteur électrique pour asservir la commande du moyen de stabilisation en tangage. De plus, un capteur de commande cyclique longitudinale, un capteur de position de pas collectif de pales d'un rotor principal, un capteur de vitesse par rapport à l'air émettent des signaux qui sont combinés pour produire un signal de sommation. Ce signal de sommation est modifié par un facteur qui varie en raison inverse de la vitesse de l'aéronef par rapport à l'air, puis à un dispositif d'asservissement du moyen de stabilisation en tangage.

Pour manœuvrer un moyen de stabilisation en tangage, certains dispositifs de positionnement utilisent non pas un mais deux actionneurs électriques montés dos à dos. Un actionneur est fixé à la poutre de queue dudit aéronef, et un autre actionneur est fixé à un moyen de stabilisation en tangage.

Le document EP 1.547.920 A1 traite d'un empennage braquable visant à réduire les vibrations engendrées sur la structure d'un hélicoptère par l'écoulement aérodynamique d'air en provenance du rotor principal. Ce document met en œuvre un dispositif de positionnement comprenant au moins un capteur de vibrations.

Le document WO 2008/142256 suggère de régler le moment de tangage d'un fuselage à partir d'au moins une gouverne de profondeur mobile équipant l'empennage horizontal d'un aéronef. Une bijection peut être réalisée entre la position de l'empennage et la valeur du moment exercé sur un mât rotor. La valeur de ce moment peut donc être contrôlée à tout moment selon d'une part un objectif de diminution de la fatigue des pièces mécaniques et d'autre part un objectif de répartition de puissance entre des hélices et un rotor de l'aéronef.

Le document FR 2.383.475 présente un hélicoptère muni d'un moyen de stabilisation en tangage et d'un dispositif de positionnement pour modifier la position du moyen de stabilisation en tangage.

Dès lors, l'aéronef comprend un moyen générateur pour transmettre un signal de commande au dispositif de positionnement. Le signal de commande est généré en fonction d'une vitesse aérodynamique, d'un pourcentage de pas collectif des pales d'un rotor, d'accélérations latérales de l'hélicoptère, d'une vitesse de rotation de l'hélicoptère autour d'un axe de tangage et d'une constante produite par un circuit de polarisation.

Le document FR 2.067.224 décrit un dispositif de positionnement mécanique actionné par inertie permettant d'engendrer la rotation d'un empennage.

Le document FR 2.962.972 est éloigné de la problématique de l'invention en présentant un moyen de stabilisation biplan fixe.

Les documents FR 2771706, WO 2015/152910, EP 0183282 et EP 0743582 sont aussi connus.

La présente invention a alors pour objet de proposer un procédé innovant pour contrôler un angle de braquage d'un moyen de stabilisation en tangage.

L'invention concerne donc un procédé pour contrôler un angle de braquage d'un moyen de stabilisation en tangage d'un aéronef mobile. Ce procédé comporte :
- une phase préliminaire comportant une étape d'élaboration pour élaborer au moins une loi de commande fournissant un angle de consigne que doit atteindre ledit angle de braquage en fonction d'une part d'au moins un paramètre de vol de l'aéronef et d'autre part d'un paramètre d'incidence du moyen de stabilisation en tangage,
- une phase opérationnelle au cours de laquelle les étapes suivantes sont réalisées :
   o détermination d'une valeur dite « valeur de vol » de chacun des paramètres de vol,
   o détermination d'une valeur dite « valeur de consigne » du paramètre d'incidence,
   o détermination d'un angle de consigne en introduisant les valeurs de vol et de consigne dans la loi de commande,
   o activation d'au moins un actionneur pour que l'angle de braquage du moyen de stabilisation en tangage atteigne ledit angle de consigne.

La loi de commande peut prendre de multiples formes. Ainsi, la loi de commande peut avoir la forme d'une relation mathématique fournissant l'angle de consigne en fonction des paramètres de vol et de consigne.

Cette loi de commande peut aussi prendre la forme d'un algorithme, d'un tableau de valeurs, ou encore d'une suite d'opérations réalisées par un circuit logique par exemple.

L'expression « loi de commande » couvre donc une ou plusieurs relations physique, logique ou mathématique permettant de fournir un angle de braquage à partir d'au moins un paramètre de vol et d'un paramètre d'incidence.

Chaque paramètre de vol est un paramètre qui représente au moins partiellement la position ou le déplacement de l'aéronef dans l'espace, ou encore le fonctionnement de certains organes de l'aéronef.

En outre, l'angle de braquage représente l'angle formé entre une corde de référence d'un profil de référence de la surface aérodynamique et un plan de référence. L'angle de braquage est nul lorsque la corde de référence est contenue dans le plan de référence.

Par ailleurs, le paramètre d'incidence est représentatif de l'incidence du moyen de stabilisation en tangage. Pour mémoire, l'incidence d'une surface aérodynamique représente l'angle formé entre une corde de référence d'un profil de la surface aérodynamique et le vecteur vitesse du vent relatif impactant cette surface aérodynamique. L'incidence du moyen de stabilisation en tangage est alors égale à l'angle de braquage de ce moyen de stabilisation en tangage seulement lorsque le vecteur vitesse du vent relatif est présent dans le plan de référence du moyen de stabilisation en tangage.

Dès lors et durant une phase préliminaire, un constructeur établit la loi de commande, par exemple à partir de simulations et/ou d'essais. Cette loi de commande permet de piloter l'angle de braquage d'un moyen de stabilisation en tangage à partir du comportement observé de l'aéronef au travers des paramètres de vol, et de l'incidence souhaitée du moyen de stabilisation en tangage au travers du paramètre d'incidence.

L'utilisation du paramètre d'incidence en tant qu'entrée de la loi de commande est innovante car une telle incidence est difficile à évaluer. En effet, la mesure de l'angle de braquage du moyen de stabilisation en tangage est aisée. Par contre, la mesure de l'incidence de ce moyen de stabilisation en tangage est délicate car cette mesure impose de déterminer le vecteur vitesse du vent relatif au niveau du bord d'attaque du moyen de stabilisation en tangage.

L'incidence d'un moyen de stabilisation en tangage en vol est en effet particulièrement difficile à estimer sans mesure directe. De nombreux phénomènes aérodynamiques complexes ont lieu sur un giravion notamment à basse vitesse (interaction rotor/empennage, effets de sol) mais aussi à haute vitesse (interaction fuselage/empennage). Aussi, utiliser une instrumentation dédiée pour mesurer une incidence afin de commander le moyen de stabilisation en tangage est désavantageux en termes de masse et de coût pour un aéronef produit en série. L'invention a l'avantage de permettre d'élaborer la commande du moyen de stabilisation en tangage à travers une consigne d'incidence sans utiliser à terme une instrumentation dédiée pour mesurer cette incidence.

En effet, durant la phase opérationnelle, la valeur de vol de chaque paramètre de vol est déterminée, par exemple à l'aide de mesures usuelles.

De plus, la valeur de consigne du paramètre d'incidence est déterminée. Néanmoins, cette valeur de consigne ne résulte pas d'une mesure directe d'une incidence. La valeur de consigne peut par exemple être fixée par un individu, ou par une loi d'incidence prédéterminée fixant la valeur de consigne en fonction de la phase de vol.

En outre, chaque valeur de vol et la valeur de consigne sont utilisées pour déterminer un angle de consigne en appliquant la loi de commande. La loi de commande n'agit pas sur les valeurs de vol des paramètres de vol et la valeur de consigne, mais utilise ces valeurs pour déterminer l'angle de braquage à atteindre. Ainsi, la loi de commande ne fournit pas une incidence à respecter en tant que telle, mais fournit un angle de braquage à partir d'une incidence de consigne au travers de la valeur de consigne.

Dès lors, le moyen de stabilisation en tangage est manœuvré pour atteindre l'angle de consigne requis, par exemple en utilisant une loi de régulation à boucle ouverte. Un capteur angulaire peut par exemple être utilisé pour vérifier le bon positionnement du moyen de stabilisation en tangage et à des fins de suivi.

Par suite, ce procédé permet bien d'atteindre une incidence de consigne, sans nécessiter la mesure de l'incidence durant la phase opérationnelle.

Ce procédé met donc en œuvre une boucle d'asservissement fermée puisque l'angle de braquage courant du moyen de stabilisation en tangage peut être mesuré et comparé à l'angle de consigne. Une telle boucle d'asservissement fermée paraissait pourtant impossible à obtenir pour une loi basée sur un paramètre d'incidence de consigne à atteindre, en raison de l'instrumentation nécessaire pour mesurer une telle incidence.

De plus, certaines techniques antérieures se limitent parfois à améliorer une phase particulière du domaine de vol, pour par exemple tendre à minimise le phénomène de bosse d'assiette. A l'inverse, la loi de commande selon l'invention permet d'ajuster en permanence et sur tout le domaine de vol l'angle de braquage du moyen de stabilisation en tangage à partir des conditions de vol courantes de l'aéronef et d'une valeur de consigne d'un paramètre d'incidence.

Lors de l'application de la loi de commande, la valeur de consigne du paramètre d'incidence peut être ajustée en fonction du comportement voulu du moyen de stabilisation en tangage. Par exemple, une incidence positive permet d'obtenir un moyen de stabilisation en tangage générant un moment à piquer sur l'aéronef, une incidence négative permettant d'obtenir un moyen de stabilisation en tangage empennage déporteur générant un moment à cabrer sur l'aéronef. Une incidence nulle permet d'obtenir un empennage sans effet sur l'équilibre de la machine.

En imposant ainsi une consigne à un paramètre d'incidence du moyen de stabilisation en tangage, la loi de commande obtenue permet de piloter l'empennage sur tout le domaine de vol. En fonction de la valeur de consigne imposée, l'angle de braquage du moyen de stabilisation en tangage varie pour que le moyen de stabilisation en tangage atteigne l'incidence désirée. Cette variation de l'angle de braquage du moyen de stabilisation en tangage induit donc le comportement désiré de l'aéronef.

Par exemple, une incidence nulle peut être imposée durant un vol stationnaire pour effacer le moyen de stabilisation en tangage vis-à-vis du flux d'air incident. A l'inverse, une consigne d'incidence négative peut être utilisée lors d'une phase de vol de descente ou de montée pour maintenir un effet déporteur du moyen de stabilisation en tangage.

Par exemple, durant une descente, l'incidence vue par un moyen de stabilisation en tangage fixe augmente pour un calage donné en passant par exemple de -10° à -5° en raison du comportement de l'aéronef. Cette augmentation de l'incidence se traduit par une réduction de l'effet déporteur du moyen de stabilisation en tangage et donc par l'augmentation de l'assiette en tangage à piquer pendant la descente.

A l'inverse, l'invention permet de fixer une valeur de consigne d'incidence fixe. Cette valeur de consigne induit une modification de l'angle de braquage du moyen de stabilisation en tangage lors de la descente et permet alors de maintenir constant l'effet déporteur du moyen de stabilisation en tangage pendant cette descente pour stabiliser l'assiette de l'aéronef.

Cette particularité peut avantageusement être utilisée pour améliorer la stabilité de l'aéronef, pour réduire la puissance consommée par l'installation motrice ou encore pour diminuer les charges exercées sur un rotor durant des manœuvres dynamiques.

Ce procédé peut de plus comporter une ou plusieurs des caractéristiques qui suivent.

Ainsi, le paramètre d'incidence est soit une incidence aérodynamique du moyen de stabilisation en tangage en tant que telle, soit un effort de portance exercé sur ledit moyen de stabilisation en tangage, soit un moment de torsion mesuré sur un arbre supportant le moyen de stabilisation en tangage.

L'incidence d'une surface aérodynamique conditionne la portance générée par cette surface aérodynamique. En corollaire, la portance d'une surface aérodynamique résulte notamment de l'incidence de cette surface aérodynamique.

Dès lors, selon une première variante, le paramètre d'incidence est l'incidence aérodynamique du moyen de stabilisation en tangage.

Lors de la phase préliminaire, des mesures d'incidence peuvent être réalisées avec une instrumentation usuelle, telle qu'une girouette.

Par contre, selon une seconde variante, le paramètre d'incidence est l'effort de portance exercé sur le moyen de stabilisation en tangage. La loi de commande dépend alors non pas d'une incidence mais d'un effort de portance du moyen de stabilisation en tangage. Lors de la phase préliminaire, une instrumentation mettant en œuvre des jauges de contraintes permet d'évaluer cet effort de portance.

Selon une troisième variante, le paramètre d'incidence est un moment de torsion mesuré sur un arbre supportant le moyen de stabilisation en tangage.

Par ailleurs, le moyen de stabilisation en tangage peut comporter deux surfaces aérodynamiques de stabilisation agencées latéralement de part et d'autre d'une structure, telle qu'une poutre de queue.

Les deux surfaces aérodynamiques de stabilisation peuvent être commandées de manière identique.

Toutefois, une loi de commande peut être établie pour chaque surface aérodynamique de stabilisation, les deux angles de braquage respectivement des deux surfaces aérodynamiques de stabilisation étant indépendants l'un de l'autre.

Cette réalisation permet de tenir compte de la dissymétrie éventuelle de l'incidence des surfaces aérodynamiques de stabilisation.

Par ailleurs, chaque paramètre de vol est par exemple à choisir dans une liste comprenant au moins un des éléments suivants :
- un paramètre de position longitudinale représentant une position d'une commande de pilotage longitudinale contrôlant un angle longitudinal séparant un vecteur de portance de l'aéronef et la pesanteur dans un plan longitudinal de l'aéronef,
- un paramètre de position latérale représentant une position d'une commande de pilotage latérale contrôlant un angle latéral séparant ledit vecteur de portance de l'aéronef et la pesanteur dans un plan latéral de l'aéronef
- une assiette en tangage de l'aéronef,
- une assiette en roulis de l'aéronef,
- une vitesse air de l'aéronef,
- une vitesse verticale de l'aéronef selon ladite pesanteur,
- une puissance consommée par une installation motrice de l'aéronef.

Par ailleurs, un giravion comporte usuellement un manche dit « manche cyclique » utilisé pour contrôler le pas cyclique des pales d'un rotor de sustentation. Le paramètre de position longitudinale peut être mesuré par exemple à l'aide d'un capteur angulaire mesurant une rotation du manche cyclique dans le plan longitudinal autour d'un premier axe. De même, le paramètre de position latérale peut être mesuré par exemple à l'aide d'un capteur angulaire mesurant une rotation du manche cyclique dans le plan latéral autour d'un deuxième axe.

Le paramètre de position longitudinale et/ou le paramètre de position latérale peuvent être mesurées en aval d'un tel manche cyclique. En effet, le giravion peut comporter des actionneurs agencés en parallèle ou en série sur des lignes de commande reliant une commande d'un pilote à un rotor. Un capteur usuel peut mesurer la position d'un point de référence d'une ligne de commande en aval desdits actionneurs pour déterminer le paramètre de position longitudinale, et/ou un autre capteur peut mesurer la position d'un point de référence d'une ligne de commande en aval desdits actionneurs pour déterminer le paramètre de position latérale.

Selon une réalisation, la phase préliminaire comporte :
- une étape de mesure durant laquelle on acquiert des données associant à chaque point de mesure les valeurs desdits des paramètres de vol et d'incidence ainsi que l'angle de braquage du moyen de stabilisation en tangage, chaque point de mesure étant réalisé en positionnant ledit moyen de stabilisation en tangage à un angle de braquage donné et en mesurant en vol les valeurs desdits des paramètres de vol et d'incidence,
- ladite étape d'élaboration durant laquelle ladite loi de commande est établie à partir desdites données.

La loi de commande est ainsi établie en réalisant au moins un vol d'essais sur un aéronef d'essai. Cet aéronef d'essai est notamment instrumenté pour pouvoir mesurer le paramètre d'incidence. Ces instruments ne sont pas utilisés lors de la phase opérationnelle.

Par exemple et selon la première variante de l'invention, l'incidence du moyen de stabilisation en tangage est mesurée par un moyen dédié, girouette ou autre, placé au niveau du bord d'attaque du moyen de stabilisation en tangage. Ce moyen dédié n'est présent sur l'aéronef que durant cette étape de mesure en raison de son inutilité par la suite. Le procédé selon l'invention n'exige pas de mesurer le paramètre d'incidence durant la phase opérationnelle ce qui permet avantageusement de ne pas rajouter une instrumentation supplémentaire sur un appareil de série.

L'étape de mesure consiste alors à enregistrer en vol la valeur des paramètres de vol et d'incidence pour différentes manœuvres types (montées, descentes, paliers, virages) sur tout le domaine de vol et pour de multiples angles de braquage du moyen de stabilisation en tangage. L'enregistrement des données en vol peut se faire par des moyens largement répandus dans l'aéronautique.

Les multiples phases de vol et les multiples angles de braquage du moyen de stabilisation en tangage utilisés permettent d'obtenir une base de données comprenant de nombreuses données. Ces nombreuses données permettent à terme d'établir une loi de commande robuste.

L'étape d'élaboration consiste alors à réaliser un traitement de ces données pour obtenir une loi de commande qui permet de retranscrire l'angle de braquage à partir des paramètres de vol et du paramètre d'incidence.

La loi de commande peut être élaborée de différentes manières à savoir en utilisant un réseau de neurones, une méthode de régression linéaire, une méthode de régression non linéaire de type moindres carrés ou maximum de vraisemblance...

En particulier, l'algorithme de Levenberg-Marquard peut être mis en œuvre pour élaborer la loi de commande.

Dès lors, pendant la phase opérationnelle, la loi de commande est utilisée en imposant une valeur de consigne au paramètre d'incidence pour obtenir un angle de consigne en fonction des conditions de vol courantes de l'appareil observées à travers les paramètres de vol.

Par ailleurs, la valeur de consigne est par exemple fixée par un pilote selon une première alternative.

Un pilote peut ainsi manœuvrer un instrument pour fixer une valeur de consigne en fonction de son besoin.

Selon une deuxième alternative, la valeur de consigne est déterminée automatiquement à l'aide d'au moins une loi d'incidence fournissant la valeur de consigne en fonction d'une phase de vol. La première alternative est compatible avec la deuxième alternative, la valeur de consigne pouvant sur un aéronef être déterminée au choix par un pilote ou de manière automatique.

A l'instar de la loi de commande, la loi d'incidence peut prendre de multiples formes. L'expression « loi d'incidence » couvre une ou plusieurs relations physiques, logiques ou mathématiques permettant de fournir une valeur de consigne d'un paramètre d'incidence en fonction de la phase de vol courante.

Par exemple, le paramètre d'incidence a au moins une des valeurs suivantes :
- une valeur nulle lors d'une phase de vol accomplie en palier à une vitesse d'avancement inférieure à un seuil de vitesse prédéterminé, et donc notamment lors d'un vol d'avancement à basse vitesse,
- une valeur nulle lors d'une phase de décollage avec un aéronef appartenant à la catégorie A, cette catégorie A étant décrite dans le règlement de certification connu sous l'acronyme « FAR 29 », à savoir la partie 29 du règlement (« Federal Aviation Régulations » en langue anglaise) de l'Administration Fédéral de l'aviation aux Etats-Unis (« Federal Aviation Administration » en langue anglaise),
- une valeur positive inférieure à un seuil d'incidence lors d'une phase de vol d'approche en atterrissage ponctuel.

La catégorie A est parfaitement connue et identifiée par l'homme du métier. Par exemple, le livre « L'hélicoptère, théorie et pratique » de P.Lefort et J.Hamann, 3e édition, y fait référence dans la page 125.

De même, l'expression « phase de vol d'approche en atterrissage ponctuel » désigne une phase connue de l'homme du métier. Un atterrissage ponctuel représente alors un atterrissage sur une zone non dégagée, à savoir une zone présentant des obstacles à éviter lors de l'atterrissage.

Par exemple, durant une phase de vol à basse vitesse durant laquelle le phénomène de bosse d'assiette peut être pénalisant sur un giravion, imposer une incidence nulle permet d'effacer au maximum le moyen de stabilisation en tangage vis-à-vis du flux d'air provenant du rotor de sustentation ce qui génère une assiette à cabrer réduite.

Pour les cas de décollage avec un aéronef de la catégorie A, imposer une incidence nulle permet aussi de réduire la puissance totale consommée par l'aéronef pour optimiser la marge de puissance disponible.

Pour les phases d'approches en atterrissage ponctuel par exemple, imposer une incidence légèrement positive permet de générer un moment à piquer sur l'aéronef avec le moyen de stabilisation en tangage afin d'améliorer la visibilité du pilote lors de l'approche. De plus, ce moment à piquer réduit la mise en assiette à cabrer de l'aéronef à la fin de l'atterrissage. Pour des aéronefs ayant un centre de gravité déporté vers l'arrière de l'aéronef, ce comportement présente un réel avantage.

En croisière, le moyen de stabilisation en tangage a pour fonction de stabiliser l'aéronef en créant un moment à cabrer sur le fuselage de l'aéronef. En imposant une incidence adéquate, la stabilité statique de l'aéronef peut être améliorée.

Selon une variante, une loi d'incidence à l'atterrissage requiert un paramètre d'incidence ayant :
- une valeur nulle en dessous d'une première vitesse d'avancement seuil, de l'ordre d'une dizaine de nœuds (kts) par exemple,
- une valeur maximale positive entre une deuxième vitesse d'avancement seuil et une troisième vitesse d'avancement seuil, la deuxième vitesse d'avancement seuil étant supérieure à la première vitesse d'avancement seuil et par exemple de l'ordre d'une vingtaine de nœuds, la troisième vitesse d'avancement seuil étant supérieure à la deuxième vitesse d'avancement seuil et par exemple de l'ordre de quarante nœuds, ledit paramètre d'incidence ayant une valeur qui croit entre la première vitesse d'avancement seuil et la deuxième vitesse d'avancement seuil,
- une valeur minimale négative au-delà d'une quatrième vitesse d'avancement seuil, la quatrième vitesse d'avancement seuil étant supérieure à la troisième vitesse d'avancement seuil et par exemple de l'ordre de soixante dix nœuds, ledit paramètre d'incidence ayant une valeur qui décroit entre la troisième vitesse d'avancement seuil et la quatrième vitesse d'avancement seuil.

Une loi d'incidence au décollage requiert par exemple un paramètre d'incidence ayant :
- une valeur nulle en dessous d'une première vitesse d'avancement limite, de l'ordre de cinquante nœuds (kts) par exemple,
- une valeur minimale négative au-delà d'une deuxième vitesse d'avancement limite, la deuxième vitesse d'avancement limite étant supérieure à la première vitesse d'avancement limite et de l'ordre de soixante dix nœuds (kts) par exemple, ledit paramètre d'incidence ayant une valeur qui décroit entre la première vitesse d'avancement limite et la deuxième vitesse d'avancement limite.

Par ailleurs, au moins une loi d'incidence est par exemple modulée par un paramètre de modulation.

Une loi d'incidence peut être modulée pour tenir compte de spécificités particulières de l'aéronef qui peuvent être appréhendées durant la phase préliminaire.

Par exemple, à basse vitesse, la valeur de consigne du paramètre d'incidence peut être ajustée pour obtenir un moyen de stabilisation en tangage plus ou moins porteur selon le compromis souhaité entre l'assiette en tangage de l'aéronef et la puissance consommée par l'installation motrice.

Si l'incidence nulle du moyen de stabilisation en tangage induit en effet une puissance consommée minimale et une mise en assiette réduite par rapport à un aéronef conventionnel ayant un empennage fixe, une incidence positive peut être imposée pour réduire encore l'assiette en tangage de cet aéronef. Cependant cette réduction est effectuée au détriment de la puissance consommée.

En croisière, la valeur de consigne du paramètre d'incidence peut être ajustée en fonction du moment exercé sur le mât d'un rotor par exemple.

En cas de panne d'un moteur de l'installation motrice, une gestion particulière de l'incidence peut aussi être utilisée.

En cas d'autorotation de l'aéronef, une gestion appropriée de la valeur de consigne du paramètre d'incidence peut être apportée en imposant une incidence positive afin de générer un moment à piquer de l'aéronef.

Par ailleurs, une protection peut être implémentée afin de borner l'angle de consigne donné par la loi de commande durant la phase opérationnelle. Cette caractéristique permet pour des raisons de sécurité de limiter le domaine d'utilisation du moyen de stabilisation en tangage.

Ainsi, durant la phase opérationnelle, l'angle de consigne est borné par au moins une borne, ladite borne étant :
- soit une borne supérieure, l'angle de consigne étant maintenu à la valeur de la borne supérieure lorsque l'angle de consigne fourni par la loi de commande est supérieur ou égal à ladite borne supérieure,
- soit une borne inférieure, l'angle de consigne étant maintenu à la valeur de la borne inférieure lorsque l'angle de consigne fourni par la loi de commande est inférieur ou égal à ladite borne supérieure.

Un aspect qui ne relève pas de l'invention et qui n'est présent qu'à titre illustratif vise un système de stabilisation d'un aéronef muni d'un moyen de stabilisation en tangage, ce moyen de stabilisation en tangage comprenant au moins une surface aérodynamique mobile en rotation, ce système de stabilisation comprenant un système de positionnement pour régler un angle de braquage de la surface aérodynamique, le système de positionnement comprenant au moins un actionneur relié à la surface aérodynamique.

Dès lors, le système de positionnement comporte une unité de traitement mettant en œuvre durant la phase opérationnelle le procédé décrit précédemment, le système de positionnement comportant un système de mesure pour déterminer durant une étape opérationnelle chaque valeur de vol de chaque paramètre de vol utilisé et un système de détermination pour déterminer ladite valeur de consigne, le système de mesure et le système de détermination étant reliés à l'unité de traitement.

L'unité de traitement peut comporter un circuit logique. De manière alternative, l'unité de traitement comprend un processeur ou équivalent associé à une mémoire. Les données transmises par le système de mesure et le système de détermination sont stockés dans la mémoire. Dès lors, le processeur exécute des instructions mémorisées dans la mémoire pour exploiter ces données et générer un angle de consigne à atteindre. L'unité de traitement transmet alors un ordre de commande à l'actionneur pour placer le moyen de stabilisation en tangage dans la position requise.

Le système de mesure peut comprendre des équipements usuels de l'aéronef. Par exemple, le système de mesure comporte au moins un des équipements suivants :
- un capteur angulaire pour mesurer un paramètre de position longitudinale représentant une position d'une commande de pilotage longitudinale contrôlant un angle longitudinal séparant un vecteur de portance de l'aéronef et la pesanteur dans un plan longitudinal de l'aéronef,
- un capteur angulaire pour mesurer un paramètre de position latérale représentant une position d'une commande de pilotage latérale contrôlant un angle latéral séparant ledit vecteur de portance de l'aéronef et la pesanteur dans un plan latéral de l'aéronef
- une unité connue sous l'acronyme « AHRS » pour mesurer une assiette en tangage et/ou une assiette en roulis de l'aéronef,
- un système anémobarométrique pour mesurer une vitesse air et /ou une vitesse verticale de l'aéronef,
- un moyen de gestion par exemple du type connu par l'acronyme FADEC pour déterminer une puissance consommée par une installation motrice de l'aéronef.

Le système de détermination peut comprendre un bouton ou équivalent pouvant être manipulé par un pilote pour qu'un pilote fixe l'angle de consigne, ou encore un calculateur intégré ou non à l'unité de traitement pour fixer automatiquement cet angle de consigne.

Par exemple, un calculateur est relié au système de mesure pour déterminer automatiquement une valeur de consigne d'un paramètre d'incidence en fonction de la phase de vol.

Un autre aspect non-revendiqué qui n'est présent qu'à titre illustratif comprend un aéronef qui comporte ce système de stabilisation en tangage.

L'invention et ses avantages apparaîtront avec plus de détails dans le cadre de la description qui suit avec des exemples donnés à titre illustratif en référence aux figures annexées qui représentent :
- la figure 1, une vue d'un aéronef,
- la figure 2, une vue d'un moyen de stabilisation en tangage,
- les figures 3 à 5, des vues explicitant l'angle de braquage du moyen de stabilisation en tangage,
- la figure 6, un schéma présentant un système de stabilisation en tangage de l'aéronef.
- la figure 7, un schéma explicitant la phase préliminaire du procédé selon l'invention.
- la figure 8, un schéma explicitant la phase opérationnelle du procédé selon l'invention.
- la figure 9, un schéma illustrant des lois d'incidence,
- la figure 10, un schéma illustrant une borne de l'angle de consigne.

Les éléments présents dans plusieurs figures distinctes sont affectés d'une seule et même référence.

Trois directions X, Y et Z orthogonales les unes par rapport aux autres sont représentées sur certaines figures.

La première direction X est dite longitudinale. Le terme « longitudinal » est relatif à toute direction sensiblement parallèle à la première direction X.

La deuxième direction Y est dite transversale. Les termes « latéral » et « transversal » sont relatifs à toute direction sensiblement parallèle à la deuxième direction Y.

Enfin, la troisième direction Z est dite en élévation. L'expression « en élévation » est relative à toute direction sensiblement parallèle à la troisième direction Z.

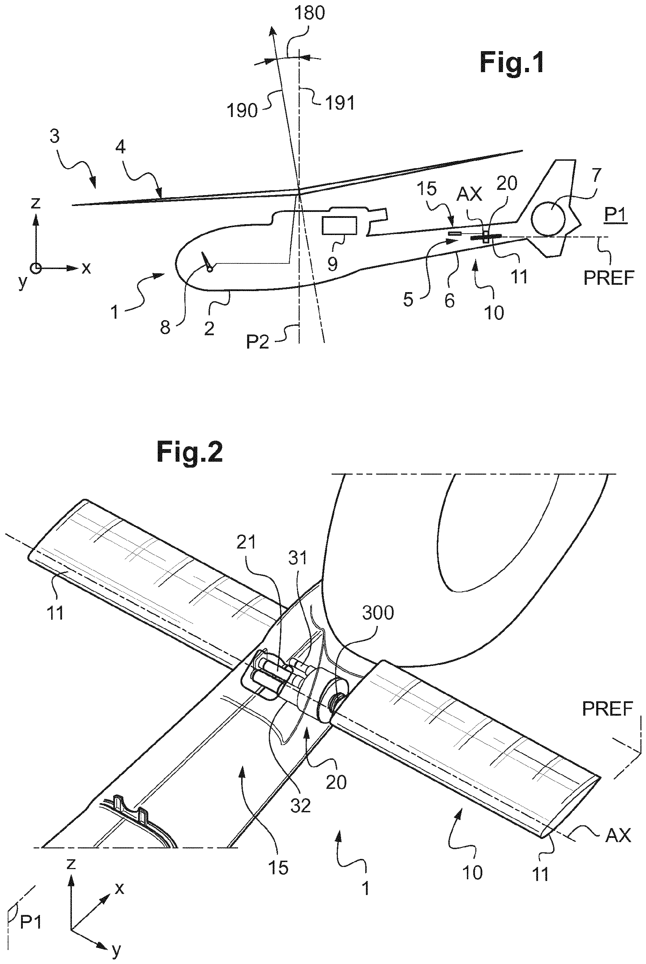

La figure 1 présente un aéronef 1 muni d'un fuselage 2. Ce fuselage 2 s'étend longitudinalement d'un nez vers une extrémité arrière, en élévation d'un fond vers une portion haute portant une voilure tournante 3, et latéralement d'un flanc gauche vers un flanc droit.

Par exemple, l'aéronef 1 est muni d'une voilure tournante 3 comprenant un rotor principal 4 de sustentation voire de propulsion. Ce rotor principal 4 est mis en rotation par une installation motrice 6.

De plus, l'aéronef 1 comporte une commande de pilotage 8 permettant de contrôler le pas des pales du rotor principal 44.

Ainsi, la position longitudinale de la commande de pilotage 8 permet de contrôler l'angle longitudinal 180 séparant longitudinalement le vecteur de portance 190 de l'aéronef 1 et la pesanteur 191 dans un plan longitudinal P1.

De même, la position latérale de la commande de pilotage 8 permet de contrôler un angle latéral séparant latéralement le vecteur de portance 190 de l'aéronef 1 et la pesanteur 191 dans un plan latéral P2.

La commande de pilotage 8 représente alors une commande de pilotage longitudinale et une commande de pilotage latérale.

Par ailleurs, l'aéronef 1 comprend un système de stabilisation 5 en tangage porté par une structure 6 de l'aéronef. Cet ensemble de stabilisation 5 inclut un moyen de stabilisation en tangage comprenant au moins une surface aérodynamique de stabilisation 11 s'étendant transversalement à partir du fuselage 2.

En référence à la figure 2, le moyen de stabilisation en tangage 10 peut comprendre deux surfaces aérodynamiques de stabilisation 11 s'étendant de part et d'autre du fuselage. Cependant, le moyen de stabilisation peut par exemple comprendre une surface aérodynamique de stabilisation s'étendant uniquement d'un côté du fuselage ou encore une unique surface aérodynamique de stabilisation traversant la structure 6 de l'aéronef.

Le moyen de stabilisation en tangage 10 est mobile en rotation autour d'un axe de braquage AX. Ainsi, chaque surface aérodynamique de stabilisation 11 est mobile en rotation autour de l'axe de braquage AX.

De plus, ce système de stabilisation 5 est muni d'un système de positionnement 15 pour commander l'angle de braquage.

Dès lors, Ce système de positionnement 15 a pour fonction d'induire une rotation des surfaces aérodynamiques de stabilisation 11, 12 autour de l'axe de braquage AX.

Le système de positionnement 15 inclut alors au moins un actionneur apte à mettre en rotation au moins une surface aérodynamique de stabilisation. Par exemple, le système de positionnement 15 comprend un arbre de sortie 21 relié au moyen de stabilisation 10, à savoir à chaque surface de stabilisation 11, 12. De plus, le système de positionnement 15 peut posséder un premier actionneur 31 et un deuxième actionneur 32 pour mettre en rotation l'arbre de sortie 21, et donc le moyen de stabilisation. Chaque actionneur inclut alors une partie entraînante mobile pouvant mettre en rotation l'arbre de sortie 21.

Les actionneurs peuvent être des moteurs électriques avec ou sans balais, des moteurs électriques générant un déplacement linéaire, des actionneurs hydrauliques, des actionneurs pneumatiques.

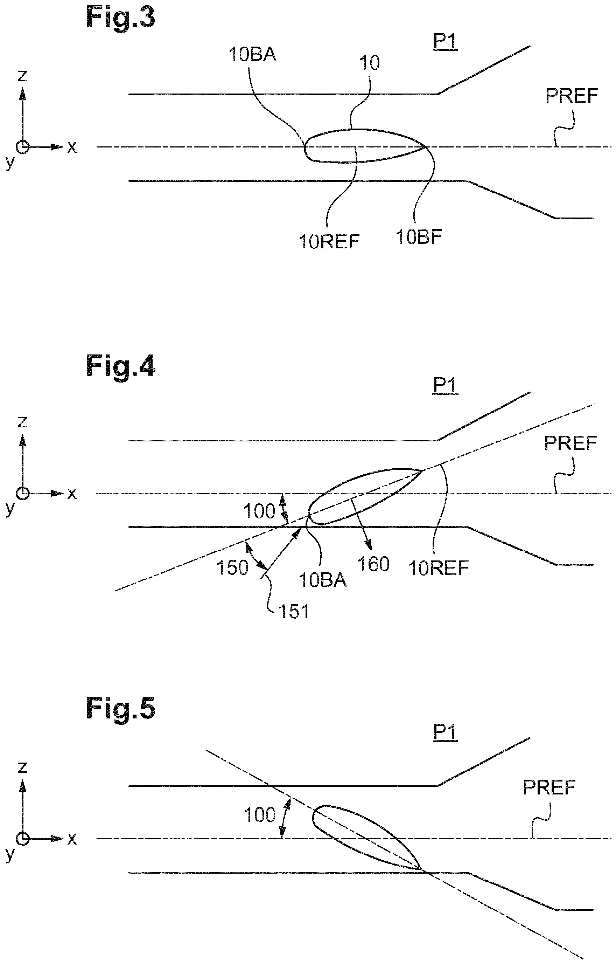

En référence à la figure 3, le système de positionnement 15 peut solliciter au moins un actionneur pour positionner le moyen de stabilisation en tangage 10 à un angle nul.

Dès lors, une corde de référence 10REF du moyen de stabilisation en tangage 10 se trouve dans cette position dans un plan de référence PREF de l'aéronef, tel qu'un plan horizontal parallèle à la direction longitudinale X et à la direction transversale Y. Une telle corde de référence représente un segment droit reliant le bord d'attaque 10BA et le bord de fuite 10BF d'un profil de référence.

En référence à la figure 4, le système de positionnement 15 peut solliciter au moins un actionneur pour positionner le moyen de stabilisation en tangage 10 à un angle de braquage 100 négatif.

Par convention, l'angle de braquage est compté négativement lorsque le bord d'attaque 10BA du profil de référence est agencé en dessous du plan de référence PREF.

Le figure 4 explicite aussi que l'angle de braquage 100 du moyen de stabilisation en tangage 10 diffère de l'incidence 150 de ce moyen de stabilisation en tangage 10. En effet, l'incidence 150 représente l'angle séparant ladite corde de référence 10REF du vecteur vitesse 151 du vent incident. Cette incidence est représentative d'un effort de portance 160 généré par le moyen de stabilisation en tangage.

En référence à la figure 5, le système de positionnement 15 peut solliciter au moins un actionneur pour positionner le moyen de stabilisation en tangage 10 à un angle de braquage 100 positif. Par convention, l'angle de braquage est compté positivement lorsque le bord d'attaque 10BA du profil de référence est agencé au dessus du plan de référence PREF.

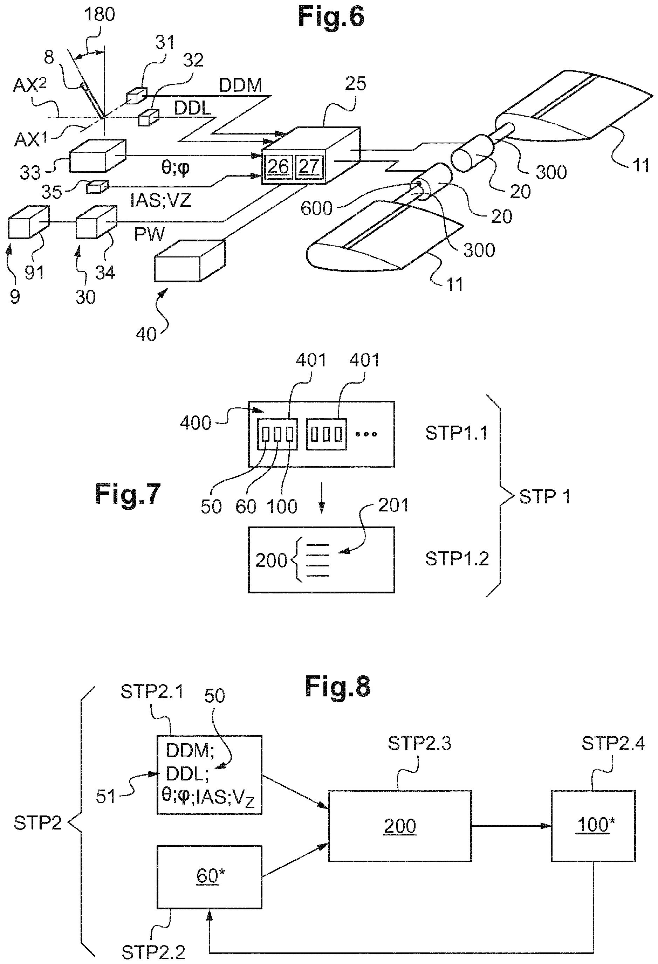

Par ailleurs et en référence à la figure 6, le système de positionnement 15 peut comporter un actionneur 20 par surface aérodynamique de stabilisation 11, 12.

En outre, le système de positionnement 15 est muni d'une unité de traitement 25 reliée à chaque actionneur. Cette unité de traitement peut par exemple comprendre un processeur 26 ou équivalant, et une mémoire 27. Le processeur 26 applique alors des instructions mémorisées dans la mémoire 27 pour piloter les actionneurs et atteindre un angle de braquage adéquat pour chaque surface aérodynamique de stabilisation.

L'unité de traitement peut prendre le cas échéant des formes différentes, en comprenant par exemple un circuit imprimé.

Pour déterminer l'angle de braquage adéquat, le système de positionnement 15 possède un système de mesure 30 relié à l'unité de traitement par au moins une liaison filaire ou non filaire. Le système de mesure 30 permet de mesurer en vol au moins une valeur dite « valeur de vol 51 » d'un paramètre. Ce paramètre est dit « paramètre de vol ». En effet, un paramètre de vol permet de caractériser au moins partiellement la position ou le déplacement de l'aéronef dans l'espace, ou encore le fonctionnement de certains organes de l'aéronef.

Le système de mesure peut comprendre des équipements usuels de l'aéronef.

Par exemple, le système de mesure peut comporter un premier capteur angulaire 31 pour mesurer un paramètre de vol du type « paramètre de position longitudinale DDM ». Ce paramètre de position longitudinale DDM représente une position de la commande de pilotage latérale 8 contrôlant l'angle longitudinal 180 évoqué précédemment.

Le système de mesure peut comporter un deuxième capteur angulaire 32 pour mesurer un paramètre de vol du type « paramètre de position latérale DDL ». Ce paramètre de position latérale représente une position de la commande de pilotage latérale contrôlant l'angle latéral précédemment évoqué.

Un paramètre de vol peut aussi être une assiette en tangage θ de l'aéronef, une assiette en roulis ϕ de l'aéronef, une vitesse air IAS de l'aéronef 1 dite « Indicated Air Speed » en langue anglaise, ou encore une vitesse verticale Vz de l'aéronef selon la pesanteur.

Dès lors, le système de mesure comprend par exemple une unité 33 connue sous l'acronyme « AHRS » qui est apte à déterminer l'assiette en tangage et/ou en roulis de l'aéronef.

Le système de mesure peut aussi comprendre un système anémobarométrique 35 pour déterminer la vitesse air IAS et /ou la vitesse verticale Vz de l'aéronef.

Enfin, un paramètre de vol peut être la puissance consommée par l'installation motrice 9.

Par suite, le système de mesure peut comprendre le moyen de gestion 34 de chaque moteur 91, tel qu'un moyen de gestion connu par l'acronyme FADEC. L'unité de traitement peut alors déterminer la puissance consommée par l'installation motrice 9 en exploitant les mesures des moyens de gestion 34.

Par ailleurs, le système de positionnement 15 possède un système de détermination 40 pour déterminer la valeur dite « valeur de consigne 60* » d'un paramètre d'incidence. Ce paramètre d'incidence peut être l'incidence aérodynamique 150 du moyen de stabilisation en tangage soit l'effort de portance 160 évoqué précédemment, soit un moment de torsion mesuré sur un arbre 300 visible sur les figures 2 et 6 supportant le moyen de stabilisation en tangage.

Le système de détermination peut comprendre un bouton ou équivalent pouvant être manipulé par un pilote, ou encore un calculateur intégré ou non à l'unité de traitement.

Par exemple, un calculateur est relié au système de mesure pour déterminer automatiquement une valeur de consigne d'un paramètre d'incidence en fonction de la phase de vol.

Le système de détermination peut être une partie intégrante de l'unité de traitement.

Par ailleurs, le système de positionnement peut comporter un instrument 600 pour déterminer l'angle de braquage courant du moyen de stabilisation en tangage. Par exemple, l'instrument 600 possède un capteur angulaire.

Les figures 7 à 10 illustrent le procédé mis en œuvre par un tel aéronef.

En référence à la figure 7, un constructeur élabore une loi de commande 20 durant une phase préliminaire STP1.

Dès lors, le constructeur acquiert durant une étape de mesure STP1.1 des données 400 lors de multiples points de mesure 401 afin d'élaborer la loi de commande. Ces données 400 comprennent à chaque point de mesure 401 les valeurs des paramètres de vol 50, la valeur du paramètre d'incidence 60 et l'angle de braquage 100 du moyen de stabilisation en tangage 10

Ces données peuvent résulter de simulations numériques par exemple.

Néanmoins, selon la réalisation de la figure 7, un constructeur instrumente un aéronef d'essai à cet effet. L'aéronef peut alors comporter le système de mesure 30 décrit précédemment, et au moins un instrument 600 mesurant l'angle de braquage du moyen de stabilisation en tangage.

Par ailleurs, l'aéronef est équipé d'un système temporaire pour mesurer la valeur d'un paramètre d'incidence, tel qu'une girouette mesurant une incidence du moyen de stabilisation en tangage ou des jauges de contraintes mesurant un effort de portance.

Dès lors, chaque point de mesure 401 est par exemple réalisé en positionnant le moyen de stabilisation en tangage 10 à un angle de braquage donné et en mesurant en vol les valeurs des paramètres de vol 50 et d'incidence 60 dans cette position.

A l'aide de données obtenues et exploitées, au moins une loi de commande 200 est élaborée durant une étape d'élaboration STP 1.2 par des méthodes mathématiques usuelles. Chaque loi de commande 200 fournit en sortie un angle de consigne que doit atteindre l'angle de braquage d'une surface aérodynamique de stabilisation en fonction d'une part d'au moins un paramètre de vol 50 de l'aéronef 1 et d'autre part d'un paramètre d'incidence 60 de consigne.

Par exemple, une unique loi de commande 200 est établie pour un moyen de stabilisation en tangage. Toutefois, le procédé permet d'établir par exemple une loi de commande 200 pour chaque surface aérodynamique de stabilisation du moyen de stabilisation en tangage 10.

Une loi de commande 200 peut prendre de multiples formes, et par exemple la forme d'un algorithme comportant de multiples traitement 201.

La loi de commande 200 est par exemple mémorisée dans l'unité de traitement 25, et notamment dans la mémoire 27.

En référence à la figure 8, durant une étape opérationnelle STP2, un constructeur met en œuvre chaque loi de commande établie en vol sur des aéronefs de série. Les étapes suivantes sont alors réalisées en boucle.

Durant une étape d'acquisition de paramètres de vol STP 2.1, la valeur dite « valeur de vol 51 » de chacun des paramètres de vol 50 est déterminée à l'aide du système de mesure.

De plus, durant une étape de consigne STP 2.2, une valeur dite « valeur de consigne 60* » du paramètre d'incidence 60 est déterminée. L'étape de consigne STP 2.2 est réalisée en parallèle de l'étape d'acquisition de paramètres de vol STP 2.1, ou encore avant voire après cette étape d'acquisition de paramètres de vol STP 2.1.

Cette valeur de consigne 60* représente un angle de braquage à atteindre avec le moyen de stabilisation en tangage. La valeur de consigne 60* est établie en mettant en œuvre le système de détermination 40.

Ainsi, la valeur de consigne 60* peut être établie par un pilote selon une première alternative.

Selon une deuxième alternative, la valeur de consigne 60* est établie en utilisant au moins une loi d'incidence qui fournit la valeur de consigne en fonction de la phase de vol. Chaque loi d'incidence peut être modulée par une modulation.

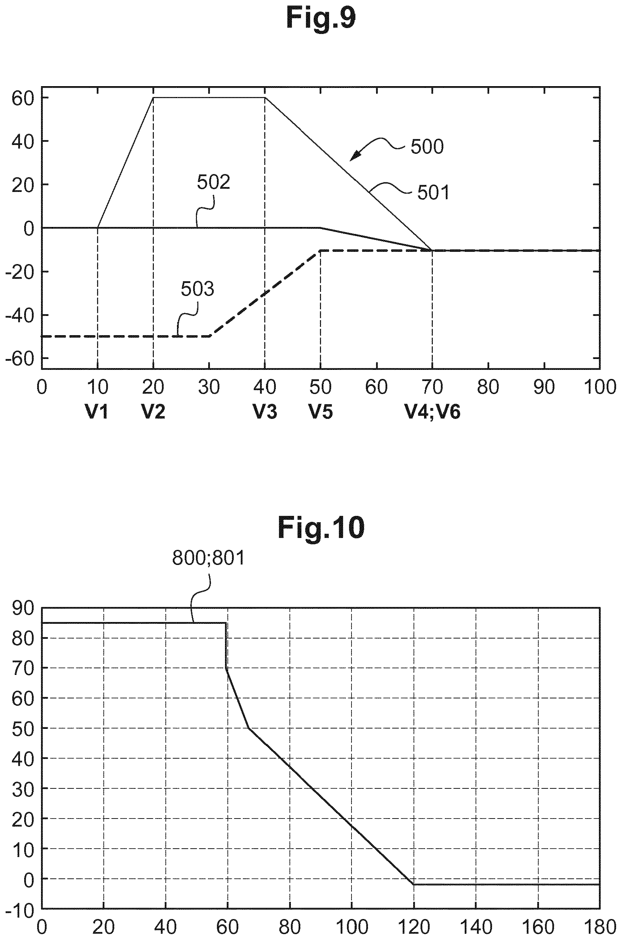

La figure 9 présente deux lois d'incidences 500 dans un graphique présentant une vitesse d'avancement de l'aéronef en abscisse, et une valeur du paramètre d'incidence en ordonnée.

Ainsi, le système de détermination peut par exemple comprendre une loi d'incidence à l'atterrissage 501. Selon cette loi d'incidence à l'atterrissage 501, le paramètre d'incidence a :
- une valeur nulle en dessous d'une vitesse d'avancement dite « première vitesse d'avancement seuil V1 »,
- une valeur maximale positive entre une vitesse dite « deuxième vitesse d'avancement seuil V2 » et une vitesse dite « troisième vitesse d'avancement seuil V3 »,
- une valeur qui croit par exemple linéairement entre la première vitesse d'avancement seuil V1 et la deuxième vitesse d'avancement seuil V2 de la valeur nulle à la valeur maximale positive,
- une valeur minimale négative au-delà d'une vitesse d'avancement dite « quatrième vitesse d'avancement seuil V4 »,
- une valeur qui décroit par exemple linéairement entre la troisième vitesse d'avancement seuil V3 et la quatrième vitesse d'avancement seuil V4 de la valeur maximale positive çà la valeur minimale négative.

Lorsqu'une phase d'atterrissage est réalisée, le système de détermination détermine communique par exemple avec le système de mesure pour déterminer la vitesse IAS courante, pour en déduire la valeur de consigne 60*.

Le système de détermination peut aussi mémoriser une loi d'incidence au décollage. Selon cette loi d'incidence au décollage, le paramètre d'incidence a :
- une valeur nulle en dessous d'une vitesse d'avancement dite « première vitesse d'avancement limite V5 »,
- une valeur minimale négative au-delà d'une vitesse d'avancement dite « deuxième vitesse d'avancement limite V6 », par exemple une deuxième vitesse d'avancement limite V6 égale à la quatrième vitesse d'avancement seuil V4,
- une valeur qui décroit par exemple linéairement entre la première vitesse d'avancement limite et la deuxième vitesse d'avancement limite de la valeur nulle à la valeur minimale négative.

La phase d'atterrissage et la phase de décollage peuvent être repérées soit automatiquement en fonction de paramètres de vol, soit être spécifiées par un pilote à l'aide d'un organe manipulable par ce pilote tel qu'un bouton.

A titre d'exemple et pour illustrer la différence entre l'invention et l'art antérieur, la figure 9 présente une courbe 503 illustrant l'incidence d'un moyen de stabilisation fixe d'un aéronef connu par rapport à sa vitesse d'avancement.

En référence à la figure 8 et durant une étape d'établissement d'un ordre de commande STP2.3, l'unité de traitement 25 détermine alors un angle de consigne 100* en introduisant les valeurs de vol 51 et la valeur de consigne 60* dans la loi de commande 200.

L'unité de traitement transmet ensuite durant une étape de réglage STP2.4 un signal à au moins un actionneur 20 pour que l'angle de braquage 100 du moyen de stabilisation en tangage 10 atteigne l'angle de consigne 100*. Au moins un actionneur déplace alors au moins une surface aérodynamique jusqu'à ce que l'angle de braquage courant de cette surface aérodynamique atteigne l'angle de consigne.

Par ailleurs et en référence à la figure 10, l'unité de traitement peut borner par sécurité l'angle de consigne 100* durant la phase opérationnelle STP2. L'angle de consigne 100* est alors borné par au moins une borne 800 pour ne pas être supérieur ou inférieur à la borne selon la nature de cette borne. Ainsi, une borne peut être une borne supérieure, l'angle de consigne étant maintenu à la valeur de la borne supérieure lorsque l'angle de consigne fourni par la loi de commande est supérieur ou égal à ladite borne supérieure. La borne peut aussi être une borne inférieure 801, l'angle de consigne étant maintenu à la valeur de la borne inférieure lorsque l'angle de consigne fourni par la loi de commande est inférieur ou égal à ladite borne supérieure

La figure 10 illustre à titre d'exemple une borne supérieure, la figure 10 présentant un graphique montrant la valeur de la borne supérieure en ordonnée et la valeur d'une vitesse d'avancement en abscisse.

## Revendications

1. Procédé pour contrôler un angle de braquage (100) d'un moyen de stabilisation en tangage (10) d'un aéronef (1) mobile,
**caractérisé en ce que** ledit procédé comporte :
- une phase préliminaire (STP1) comportant une étape d'élaboration (STP1.2) pour élaborer au moins une loi de commande (200) fournissant un angle de consigne (100*) que doit atteindre ledit angle de braquage (100) en fonction d'une part d'au moins un paramètre de vol (50) de l'aéronef (1) et d'autre part d'un paramètre d'incidence (60) du moyen de stabilisation en tangage (10), ledit paramètre d'incidence (60) étant soit une incidence aérodynamique (150) du moyen de stabilisation en tangage soit un effort de portance (160) exercé sur ledit moyen de stabilisation en tangage (10), soit un moment de torsion mesuré sur un arbre (300) supportant le moyen de stabilisation en tangage
- une phase opérationnelle (STP2) au cours de laquelle les étapes suivantes sont réalisées :
∘ détermination d'une valeur dite « valeur de vol (51) » de chacun desdits paramètres de vol (50),
∘ détermination d'une valeur dite « valeur de consigne (60*) » dudit paramètre d'incidence (60),
∘ détermination d'un angle de consigne (100*) en introduisant lesdites valeurs de vol (51) et de consigne (60*) dans ladite loi de commande (200),
∘ activation d'au moins un actionneur (20) pour que ledit angle de braquage (100) du moyen de stabilisation en tangage (10) atteigne ledit angle de consigne (100*).

2. Procédé selon la revendication 1,
**caractérisé en ce que** ledit moyen de stabilisation en tangage (10) comportant deux surfaces aérodynamiques (11, 12) de stabilisation agencées latéralement de part et d'autre d'une structure (6), une loi de commande (200) est établie pour chaque surface aérodynamique (11, 12) de stabilisation, les deux angles de braquage respectivement des deux surfaces aérodynamique (11, 12) de stabilisation étant indépendants l'un de l'autre.

3. Procédé selon l'une quelconque des revendications 1 à 2,
**caractérisé en ce que** chaque paramètre de vol (50) est à choisir dans une liste comprenant au moins un des éléments suivants :
- un paramètre de position longitudinale (DDM) représentant une position d'une commande de pilotage longitudinale (8) contrôlant un angle longitudinal (180) séparant un vecteur de portance (190) de l'aéronef (1) et la pesanteur (191) dans un plan longitudinal (P1) de l'aéronef (1),
- un paramètre de position latérale (DDL) représentant une position d'une commande de pilotage latérale (8) contrôlant un angle latéral séparant ledit vecteur de portance (190) de l'aéronef (1) et la pesanteur (191) dans un plan latéral (P2) de l'aéronef (1).
- une assiette en tangage (θ) de l'aéronef (1),
- une assiette en roulis (ϕ) de l'aéronef (1),
- une vitesse air (IAS) de l'aéronef (1),
- une vitesse verticale (Vz) de l'aéronef (1) selon ladite pesanteur (191),
- une puissance consommée par une installation motrice (9) de l'aéronef (1).

4. Procédé selon l'une quelconque des revendications 1 à 3,
**caractérisé en ce que** ladite phase préliminaire (STP1) comporte :
- une étape de mesure (STP1.1) durant laquelle on acquiert des données (400) associant à chaque point de mesure (401) les valeurs desdits paramètres de vol (50) et d'incidence (60) ainsi que l'angle de braquage (100) du moyen de stabilisation en tangage (10), chaque point de mesure (401) étant réalisé en positionnant ledit moyen de stabilisation en tangage (10) à un angle de braquage donné et en mesurant en vol les valeurs desdits paramètres de vol (50) et d'incidence (60),
- ladite étape d'élaboration (STP1.2) durant laquelle ladite loi de commande (200) est établie à partir desdites données (400).

5. Procédé selon l'une quelconque des revendications 1 à 4,
**caractérisé en ce que** ladite valeur de consigne (60*) est paramétrée par un instrument manœuvré par un pilote.

6. Procédé selon l'une quelconque des revendications 1 à 5,
**caractérisé en ce que** ladite valeur de consigne (60*) est déterminée automatiquement à l'aide d'au moins une loi d'incidence (500) fournissant ladite valeur de consigne (60*) en fonction d'une phase de vol.

7. Procédé selon l'une quelconque des revendications 1 à 6,
**caractérisé en ce que** ladite valeur de consigne (60*) dudit paramètre d'incidence (60) a au moins une des valeurs suivantes :
- une valeur nulle lors d'une phase de vol accomplie en palier à une vitesse d'avancement inférieure à un seuil de vitesse,
- une valeur nulle lors d'une phase de décollage avec un aéronef appartenant à la catégorie A,
- une valeur positive inférieure à un seuil d'incidence lors d'une phase de vol d'approche en atterrissage ponctuel.

8. Procédé selon la revendication 7,
**caractérisé en ce qu'**une loi d'incidence à l'atterrissage (501) requiert une valeur de consigne (60*) du paramètre d'incidence ayant :
- une valeur nulle en dessous d'une première vitesse d'avancement seuil (V1),
- une valeur maximale positive entre une deuxième vitesse d'avancement seuil (V2) et une troisième vitesse d'avancement seuil (V3), la deuxième vitesse d'avancement seuil (V2) étant supérieure à la première vitesse d'avancement seuil (V1), la troisième vitesse d'avancement seuil (V3) étant supérieure à la deuxième vitesse d'avancement seuil (V2), ledit paramètre d'incidence ayant une valeur qui croit entre la première vitesse d'avancement seuil (V1) et la deuxième vitesse d'avancement seuil (V2),
- une valeur minimale négative au-delà d'une quatrième vitesse d'avancement seuil (V4), la quatrième vitesse d'avancement seuil (V4) étant supérieure à la troisième vitesse d'avancement seuil (V3), ledit paramètre d'incidence ayant une valeur qui décroit entre la troisième vitesse d'avancement seuil (V3) et la quatrième vitesse d'avancement seuil (V4).

9. Procédé selon la revendication 7
**caractérisé en ce qu'**une loi d'incidence au décollage (502) requiert une valeur de consigne (60*) du paramètre d'incidence ayant :
- une valeur nulle en dessous d'une première vitesse d'avancement limite,
- une valeur minimale négative au-delà d'une deuxième vitesse d'avancement limite, la deuxième vitesse d'avancement limite étant supérieure à la première vitesse d'avancement limite, ledit paramètre d'incidence ayant une valeur qui décroit entre la première vitesse d'avancement limite et la deuxième vitesse d'avancement limite.

10. Procédé selon la revendication 7,
**caractérisé en ce qu'**au moins une loi d'incidence est modulée par un paramètre de modulation.

11. Procédé selon l'une quelconque des revendications 1 à 10,
**caractérisé en ce que** durant la phase opérationnelle (STP2), ledit angle de consigne (100*) est borné par au moins une borne (800), ladite borne étant :
- soit une borne supérieure (801), l'angle de consigne étant maintenu à la valeur de la borne supérieure lorsque l'angle de consigne fourni par la loi de commande est supérieur ou égal à ladite borne supérieure,
- soit une borne inférieure, l'angle de consigne étant maintenu à la valeur de la borne inférieure lorsque l'angle de consigne fourni par la loi de commande est inférieur ou égal à ladite borne supérieure.

## Patentansprüche

1. Verfahren zur Steuerung eines Lenkwinkels (100) einer Nickstabilisierungseinrichtung (10) eines bewegten Luftfahrzeugs (1), **dadurch gekennzeichnet, dass** das Verfahren umfasst:
- eine Vorphase (STP1), die einen Ausarbeitungsschritt (STP1.2) zur Ausarbeitung mindestens einer Steuerregel (200) umfasst, die einen Sollwinkel (100*), den der Lenkwinkel (100) erreichen soll, in Abhängigkeit einerseits von mindestens einem Flugparameter (50) des Luftfahrzeugs (1) und andererseits von einem Anstellwinkelparameter (60) der Nickstabilisierungseinrichtung (10) liefert, wobei der Anstellwinkelparameter (60) entweder ein aerodynamischer Anstellwinkel (150) der Nickstabilisierungseinrichtung oder eine auf die Nickstabilisierungseinrichtung (10) ausgeübte Auftriebskraft (160) oder ein an einer die Nickstabilisierungseinrichtung tragenden Welle (300) gemessenes Torsionsmoment ist,
- eine Betriebsphase (STP2), in der die folgenden Schritte ausgeführt werden:
• Bestimmen eines als "Flugwert (51)" bezeichneten Wertes eines jeden der Flugparameter (50),
• Bestimmen eines als "Sollwert (60*)" bezeichneten Wertes des Anstellwinkelparameters (60),
• Bestimmen eines Sollwinkels (100*) durch Eingeben der Flug- (51) und Sollwerte (60*) in die Steuerregel (200),
• Aktivieren mindestens eines Aktuators (20), damit der Lenkwinkel (100) der Nickstabilisierungseinrichtung (10) den Sollwinkel (100*) erreicht.

2. Verfahren nach Anspruch 1,
**dadurch gekennzeichnet, dass** die Neigungsstabilisierungseinrichtung (10) zwei aerodynamische Stabilisierungsflächen (11, 12) umfasst, die seitlich auf jeder Seite einer Struktur (6) angeordnet sind, dass für jede aerodynamische Stabilisierungsfläche (11, 12) eine Steuerregel (200) erstellt wird, und dass die beiden Steuerwinkel der beiden aerodynamischen Stabilisierungsflächen (11, 12) jeweils unabhängig voneinander sind.

3. Verfahren nach einem der Ansprüche 1 bis 2,
**dadurch gekennzeichnet, dass** jeder Flugparameter (50) aus einer Liste auszuwählen ist, die mindestens eines der folgenden Elemente umfasst:
- einen Longitudinalpositionsparameter (DDM), der eine Position einer Longitudinalsteuerungseinrichtung (8) darstellt, die einen Longitudinalwinkel (180) steuert, der in einer Longitudinalebene (P1) des Luftfahrzeugs (1) einen Auftriebsvektor (190) des Luftfahrzeugs (1) und die Schwerkraft (191) trennt,
- einen Lateralpositionsparameter (DDL), der eine Position einer Lateralsteuerungseinrichtung (8) darstellt, die einen Lateralwinkel steuert, der in einer Lateralebene (P2) des Luftfahrzeugs (1) den Auftriebsvektor (190) des Luftfahrzeugs (1) und die Schwerkraft (191) trennt,
- eine Nicklage (9) des Luftfahrzeugs (1),
- eine Rolllage ((p) des Luftfahrzeugs (1),
- eine Luftgeschwindigkeit (IAS) des Luftfahrzeugs (1),
- eine vertikale Geschwindigkeit (Vz) des Luftfahrzeugs (1) in Richtung der Schwerkraft (191),
- eine von einem Triebwerk (9) des Luftfahrzeugs (1) verbrauchte Leistung.

4. Verfahren nach einem der Ansprüche 1 bis 3,
**dadurch gekennzeichnet, dass** die Vorphase (STP1) umfasst:
- einen Messschritt (STP1.1), in dessen Verlauf Daten (400) erfasst werden, die jedem Messpunkt (401) die Werte der Flug-(50) und Anstellwinkelparameter (60) und den Steuerwinkel (100) der Nickstabilisierungseinrichtung (10) zuordnen, wobei jeder Messpunkt (401) durch Einstellen der Nickstabilisierungseinrichtung (10) auf einen gegebenen Lenkwinkel und durch Messen der Werte der Flug- (50) und Anstellwinkelparameter (60) im Flug erzeugt wird,
- den Ausarbeitungsschritt (STP1.2), in dem die Steuerregel (200) aus den Daten (400) erstellt wird.

5. Verfahren nach einem der Ansprüche 1 bis 4,
**dadurch gekennzeichnet, dass** der Sollwert (60*) durch ein von einem Piloten bedientes Instrument eingestellt wird.

6. Verfahren nach einem der Ansprüche 1 bis 5,
**dadurch gekennzeichnet, dass** der Sollwert (60*) automatisch mit Hilfe von mindestens einer Anstellwinkelregel (500) bestimmt wird, die den Sollwert (60*) in Abhängigkeit von einer Flugphase liefert.

7. Verfahren nach einem der Ansprüche 1 bis 6,
**dadurch gekennzeichnet, dass** der Sollwert (60*) des Anstellwinkelparameters (60) mindestens einen der folgenden Werte hat:
- einen Nullwert während einer Flugphase, die im Horizontalflug mit einer Reisegeschwindigkeit innerhalb einer Geschwindigkeitsschwelle durchgeführt wird,
- einen Nullwert während einer Startphase mit einem Luftfahrzeug der Kategorie A,
- einen positiven Wert innerhalb einer Anstellwinkelschwelle während einer Punktlandeanflugs-Flugphase.

8. Verfahren nach Anspruch 7,
**dadurch gekennzeichnet, dass** eine Anstellwinkelregel (501) beim Landen einen Sollwert (60*) des Anstellwinkelparameters erfordert mit:
- einem Nullwert unterhalb einer ersten Schwellen-Reisegeschwindigkeit (V1),
- einem positiven Maximalwert zwischen einer zweiten Schwellen-Reisegeschwindigkeit(V2) und einer dritten Schwellen-Reisegeschwindigkeit(V3), wobei die zweite Schwellen-Reisegeschwindigkeit (V2) größer ist als die erste Schwellen-Reisegeschwindigkeit (V1), die dritte Schwellen-Reisegeschwindigkeit (V3) größer ist als die zweite Schwellen-Reisegeschwindigkeit (V2), und wobei der Anstellwinkelparameter einen Wert aufweist, der zwischen der ersten Schwellen-Reisegeschwindigkeit (V1) und der zweiten Schwellen-Reisegeschwindigkeit (V2) zunimmt,
- einem negativen Minimalwert oberhalb einer vierten Schwellen-Reisegeschwindigkeit (V4), wobei die vierte Schwellen-Reisegeschwindigkeit (V4) größer ist als die dritte Schwellen-Reisegeschwindigkeit (V3), und wobei der Anstellwinkelparameter einen Wert hat, der zwischen der dritten Schwellen-Reisegeschwindigkeit (V3) und der vierten Schwellen-Reisegeschwindigkeit (V4) abnimmt.

9. Verfahren nach Anspruch 7,
**dadurch gekennzeichnet, dass** eine Start-Anstellwinkelregel (502) einen Sollwert (60") des Anstellwinkelparameters erfordert mit:
- einem Nullwert unterhalb einer ersten Schwellen-Reisegeschwindigkeit,
- einem negativen Minimalwert oberhalb einer zweiten Schwellen-Reisegeschwindigkeit, wobei die zweite Schwellen-Reisegeschwindigkeit höher ist als die erste Schwellen-Reisegeschwindigkeit, und wobei der Anstellwinkelparameter einen Wert hat, der zwischen der ersten Schwellen-Reisegeschwindigkeit und der zweiten Schwellen-Reisegeschwindigkeit abnimmt.

10. Verfahren nach Anspruch 7,
**dadurch gekennzeichnet, dass** mindestens eine Anstellwinkelregel durch einen Modulationsparameter moduliert wird.

11. Verfahren nach einem der Ansprüche 1 bis 10,
**dadurch gekennzeichnet, dass** während der Betriebsphase (STP2) der Sollwinkel (100*) durch mindestens einen Grenzwert (800) begrenzt wird, wobei der Grenzwert entweder:
- ein oberer Grenzwert (801) ist, wobei der Sollwinkel auf dem Wert des oberen Grenzwerts gehalten wird, wenn der durch die Steuerregel bereitgestellte Sollwinkel größer oder gleich dem oberen Grenzwert ist,
- oder ein unterer Grenzwert ist, wobei der Sollwinkel auf dem Wert des unteren Grenzwerts gehalten wird, wenn der durch die Steuerregel bereitgestellte Sollwinkel kleiner oder gleich dem oberen Grenzwert ist.

## Claims

1. Method for controlling a deflection angle (100) of a mobile pitch stabilisation means (10) of an aircraft (1),
**characterised in that** the said method comprises:
- a preliminary phase (STP1) comprising a compilation step (STP1.2) for compiling at least one control law (200) providing a setpoint angle (100*) that the said deflection angle (100) should reach, as a function on the one hand of at least one flight parameter (50) of the aircraft (1) and on the other hand of an incidence parameter (60) of the pitch stabilisation means (10), the said incidence parameter (60) being an aerodynamic incidence (150) of the pitch stabilisation means, or a lift force (160) exerted on the said pitch stabilisation means (10), or a torsional moment measured on a shaft (300) supporting the pitch stabilisation means,
- an operational phase (STP2) during which the following steps are carried out:
∘ determination of a value referred to as the "flight value (51)" of each of the said flight parameters (50),
∘ determination of a value referred to as the "setpoint value (60*)" of the said incidence parameter (60),
∘ determination of a setpoint value (100*) by introducing the said flight (51) and setpoint (60*) values into the said control law (200),
∘ activation of least one actuator (20) so that the said deflection angle (100) of the mobile pitch stabilisation means (10) reaches the said setpoint angle (100*).

2. Method according to Claim 1,
**characterised in that**, the said pitch stabilisation means (10) comprising two stabilising aerodynamic surfaces (11, 12) arranged laterally on either side of a structure (6), a control law (200) is established for each stabilising aerodynamic surface (11, 12), the two deflection angles respectively of the two stabilising aerodynamic surfaces (11, 12) being independent of one another.

3. Method according to either of Claims 1 and 2,
**characterised in that** each flight parameter (50) is selected from a list comprising at least one of the following elements:
- a longitudinal position parameter (DDM) representing a position of a longitudinal piloting control (8) controlling a longitudinal angle (180) between a lift vector (190) of the aircraft (1) and the direction of gravity (191) in a longitudinal plane (P1) of the aircraft (1),
- a lateral position parameter (DDL) representing a position of a lateral piloting control (8) controlling a lateral angle between the said lift vector (190) of the aircraft (1) and the direction of gravity (191) in a lateral plane (P2) of the aircraft (1),
- a pitch inclination (θ) of the aircraft (1),
- a roll inclination (ϕ) of the aircraft (1),
- an air speed (IAS) of the aircraft (1),
- a vertical speed (Vz) of the aircraft (1) along the said direction of gravity (191),
- a power consumed by a power plant of the aircraft (1).

4. Method according to any one of Claims 1 to 3,
**characterised in that** the said preliminary phase (STP1) comprises:
- a measurement step (STP1.1), during which data (400) associating the values of the said flight (50) and incidence (60) parameters as well as the deflection angle (100) of the pitch stabilisation means (10) with each measurement point (401) are acquired, each measurement point (401) being formed by positioning the said pitch stabilisation means (10) at a given deflection angle and by measuring the values of the said flight (50) and incidence (60) parameters during flight,
- the said preparation step (STP1.2), during which the control law (200) is established on the basis of the said data (400).

5. Method according to any one of Claims 1 to 4,
**characterised in that** the said setpoint value (60*) is set by an instrument operated by a pilot.

6. Method according to any one of Claims 1 to 5,
**characterised in that** the said setpoint value (60*) is determined automatically with the aid of at least one incidence law (500) providing the said setpoint value (60*) as a function of a flight phase.

7. Method according to any one of Claims 1 to 6,
**characterised in that** the said setpoint value (60*) of the said incidence parameter (60) has at least one of the following values:
- a zero value during a flight phase carried out level with a speed of advance less than a threshold speed,
- a zero value during a take-off phase with an aircraft belonging to category A, and
- a positive value below an incidence threshold during an approach flight phase in precision landing.

8. Method according to Claim 7,
**characterised in that** a landing incidence law (501) requires a setpoint value (60*) of the incidence parameter having:
- a zero value below a first threshold speed of advance (V1),
- a positive maximum value between a second threshold speed of advance (V2) and a third threshold speed of advance (V3), the second threshold speed of advance (V2) being greater than the first threshold speed of advance (V1), the third threshold speed of advance (V3) being greater than the second threshold speed of advance (V2), the said incidence parameter having a value which increases between the first threshold speed of advance (V1) and the second threshold speed of advance (V2),
- a negative minimum value beyond a fourth threshold speed of advance (V4), the fourth threshold speed of advance (V4) being greater than the third threshold speed of advance (V3), the said incidence parameter having a value which decreases between the third threshold speed of advance (V3) and the fourth threshold speed of advance (V4).

9. Method according to Claim 7,
**characterised in that** a take-off incidence law (502) requires a setpoint value (60*) of the incidence parameter having:
- a zero value below a first limit speed of advance,
- a negative minimum value beyond a second limit speed of advance, the second limit speed of advance being greater than the first limit speed of advance, the said incidence parameter having a value which decreases between the first limit speed of advance and the second limit speed of advance.

10. Method according to Claim 7,
**characterised in that** at least one incidence law is modulated by a modulation parameter.

11. Method according to any one of Claims 1 to 10,
**characterised in that**, during the operational phase (STP2), the said setpoint value (60*) is bounded by at least one bound (800), the said bound being:
- either an upper bound (801), the setpoint angle being kept at the value of the upper bound when the setpoint angle provided by the control law is greater than or equal to the said upper bound,
- or a lower bound, the setpoint angle being kept at the value of the lower bound when the setpoint angle provided by the control law is less than or equal to the said upper bound.
